Europäisches Patentamt

European Patent Office

Office européen des brevets

(11) Veröffentlichungsnummer: **0 417 741 A1**

# EUROPÄISCHE PATENTANMELDUNG

(21) Anmeldenummer: 90117513.3

(22) Anmeldetag: 11.09.90

(51) Int. Cl.⁵: **F16D 1/08**

(30) Priorität: 11.09.89 DE 3930304

(43) Veröffentlichungstag der Anmeldung:
**20.03.91 Patentblatt 91/12**

(84) Benannte Vertragsstaaten:
**AT BE CH DE DK ES FR GB GR IT LI LU NL SE**

(71) Anmelder: **LITTON PRECISION PRODUCTS INTERNATIONAL GMBH Feringastrasse 14**

**W-8043 Unterföhring(DE)**

(72) Erfinder: **Geroldinger, Arnold Vielsassing 9 A-4780 Schärding(AT)**

(74) Vertreter: **TER MEER - MÜLLER - STEINMEISTER & PARTNER Mauerkircherstrasse 45 W-8000 München 80(DE)**

(54) **Kupplungsnabe.**

(57) Die klemmende Kupplungsnabe zeichnet sich durch eine in Axialrichtung zugängliche Zustellvorrichtung für den klemmenden Teilbereich (2) der Nabe aus. Bei einer bevorzugten Ausführungsform besteht die Zustellvorrichtung aus einem im Nabenkörper achsparallel gelagerten Exzenternocken 6, der über einen Inbusschlüssel verdreht werden kann.

FIG.1

## KUPPLUNGSNABE

Die Erfindung betrifft eine Kupplungsnabe zur Verbindung einer Welle mit einem durch diese zu drehenden Teil, bei der die Nabe über einen Teilbereich ihrer axialen Länge geschlitzt und die Kupplungsverbindung durch radiale Klemmung des geschlitzten Bereichs mittels einer selbsthaltenden Zustellvorrichtung bewirkt wird.

Kupplungsnaben der in Rede stehenden Art gibt es in zwei Ausführungen. Bei einer Ausführungsart sind am Außenumfang der Kupplungsleibung oder des Kupplungskörpers eine oder mehrere, üblicherweise radiale Gewindebohrungen vorgesehen, in die Schrauben zum Fixieren der Nabe auf der Welle eingezogen werden. Eine andere Ausführungsart verwendet einen Nabenkörper, der über einen Teilbereich seiner axialen Länge geschlitzt ist und mit einer annähernd tangential zum Nabenkörper und senkrecht zur Achsrichtung wirkenden Schraube eine Klemmung ermöglicht. Diese Klemmart hat gegenüber der ersterwähnten den Vorteil, daß die Welle auch bei mehrmaligem Öffnen und Schließen der Klemmung beschädigungsfrei bleibt. Beide bekannte Ausführungsarten haben aber den Nachteil, daß die am Umfang angeordneten Klemmschrauben nur radial zugänglich sind. Dies ist für einige Anwendungsarten solcher Kupplungsnaben nachteilig, zumindest unpraktisch. So muß etwa bei Drehgebern, in denen derartige Kupplungsnaben verwendet werden, beim Anbau an Maschinenteilen ausreichender Raum für einen radialen Zugang zu den Klemmschrauben eingeplant werden. Außerdem ist bei üblicherweise innerhalb des Gehäuses liegender Klemmkupplung, einer sogenannten integrierten Kupplung, nur in einer bestimmten Drehstellung eine Betätigung der Klemmschraube(n) möglich.

Der Erfindung liegt damit die Aufgabe zugrunde, Kupplungsnaben insbesondere der zweiterwähnten Art, bei der ein mehrmaliges Lösen der Klemmschrauben ohne Beschädigung der Welle möglich ist, also Kupplungsnaben, wie sie insbesondere für Drehgeber verwendet werden, so zu verbessern, daß eine einfachere Zustellung der Kupplung möglich ist ohne besonderen Raum für einen radialen Zugang zu den Klemmschrauben.

Die Erfindung ist bei einer Kupplungsnabe der eingangs genannten Art dadurch gekennzeichnet, daß die Zustellvorrichtung aus einem achsparallel im Körper des ungeschlitzten Teilbereichs der Nabe gehaltenen, verdrehbaren Zustellelement besteht, das bei Verdrehen einen radialen Zustelldruck auf den geschlitzten Bereich der Nabe bewirkt.

Vorzugsweise besteht das Zustellelement aus einem Exzenternocken, der im nichtgeschlitzten Teilbereich der Nabe drehbar gelagert ist und axial verdreht werden kann, beispielsweise mittels eines in eine axiale Schlüsselöffnung einzusetzenden Schlüssels, insbesondere Inbusschlüssels.

Eine andere Ausführungsform einer Nabe mit axial zu betätigender und radial wirkender Klemmung gemäß der Erfindung sieht die Verwendung einer Schraube mit kegeligem Kopf vor, die in den nichtgeschlitzten Teilbereich des Nabenkörpers eingeschraubt wird und beim Anziehen eine axiale Druckwirkung auf einen Teilbereich des geschlitzten Teile der Nabe ausübt.

Die erfindungsgemäße Kupplungsnabe zeichnet sich vor allem dadurch aus, daß auf eine radiale Zugangsmöglichkeit zur Zustellvorrichtung, beispielsweise bei Verwendung in Drehgebern, nicht mehr geachtet zu werden braucht. Dies bringt den weiteren Vorteil, daß z. B. bei Hohlwellendrehgebern mit integrierter Kupplung ein leichter axialere Zugang zur klemmenden Zustellvorrichtung gegeben ist. So kann beispielsweise für die Zustellung der Klemmung der Kupplungsnabe des Hohlwellendrehgebers eine abdeckbare Öffnung in der Abdeckhaube vorgesehen sein, so daß letztere für die Klemmung nicht abgenommen zu werden braucht. Eine beschädigungsfreie Montage des Drehgebers ist damit auf einfache Weise gewährleistet.

Ein Ausführungsbeispiel einer erfindungsgemäßen Kupplungsnabe wird nachfolgend unter Bezug auf die Zeichnung beschrieben. Es zeigen:

Fig. 1 die Axialansicht auf eine klemmende Kupplungsnabe mit erfindungsgemäßen Merkmalen, und

Fig. 2 die Schnittdarstellung der Kupplungsnabe nach Fig. 1, gesehen in Richtung der Pfeile an der Schnittlinie A-A in Fig. 1.

Der Körper der dargestellten Kupplungsnabe besteht aus zwei Teilbereichen, von denen der eine Teilbereich 1 die in eine Axialbohrung 3 eingesetzte Welle, beispielsweise eines Drehgebers (nicht dargestellt) vollständig mit einer bestimmten geeigneten Passung, beispielsweise 8H7 umschließt. Der andere Teilbereich 2 der Kupplungsnabe weist einen in Axialrichtung verlaufenden Schlitz 4 auf, der mittels einer nachfolgend näher beschriebenen Zustellvorrichtung enger oder weiter gestellt werden kann und bei Zustellung eine Klemm- und damit Kupplungswirkung auf die die Bohrung 3 durchsetzende Welle ausübt. Die beiden Teilbereiche 1 und 2 der Klemmnabe sind aus fertigungstechnischen Gründen zweckmäßig zweiteilig ausgeführt. Beide Teile 1, 2 werden miteinander z. B. verklebt oder verschraubt. Aus Sicherheitsgründen kann es angezeigt sein, beides zusammen anzuwenden.

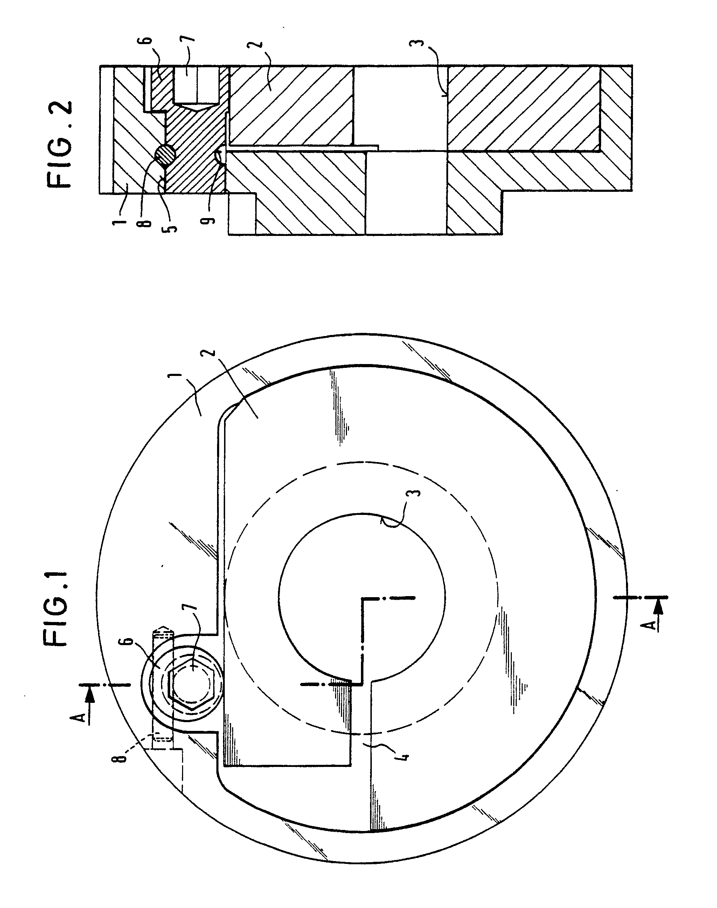

Die auf einen freien Endbereich des geschlitzten Teils 2 der Nabe wirkende Zustellvorrichtung besteht gemäß einem bevorzugten Ausführungsbeispiel der Erfindung aus einem Exzenternocken 6, der im nichtgeschlitzten Teil 1 der Nabe in einer Bohrung 5 drehbar gelagert ist und mittels umlaufender Paßnut 9 und Sicherungsstift 8 gegen axiale Verschiebung und Herausfallen gesichert ist. Im Bereich des geschlitzten Teils 2 der Nabe ist der Exzenternocken vorgesehen, der bei Einsetzen eines Inbusschlüssels in eine entsprechende Schlüsselöffnung 7 verdreht werden kann und bei Verdrehen um 180° gegenüber der in den Fig. 1 und 2 dargestellten Position eine vollständige Zustellung des Schlitzes 4 bewirkt.

Gemäß einer anderen nicht dargestellten Ausführungsform kann der Exzenternocken 6 durch eine Schraube mit kegeligem Kopf ersetzt sein, die in ein entsprechendes Schraubgewinde im Teilbereich 1 der Nabe eingezogen wird und beim Einschrauben ebenfalls eine Zustellung des Schlitzes 4 bewirkt.

Aus Rentabilitätsgründen kann die Nabenbohrung 3 auch größer gehalten werden, um beispielsweise für kundenspezifi sche unterschiedliche Bohrungen, etwa bei Drehgebern, geschlitzte Reduktionshülsen einsetzen zu können.

Die klemmende Kupplungsnabe zeichnet sich vor allem dadurch aus, daß die Zustellvorrichtung in Axialrichtung zugänglich ist, so daß beim integrierten Einbau, insbesondere in Drehgeber, an den damit auszurüstenden Maschinenteilen kein radialer Zugangsbereich eingeplant und ausgespart werden muß. Ist an der Abdeckhaube keine Axialöffnung vorgesehen, so ist bei deren Entfernung gleichwohl sofort eine Öffnung der Kupplungsnabe über die radial zugängliche Zustellvorrichtung möglich. Die Welle bzw. der Drehgeber müssen nicht in eine spezielle Position gedreht werden, um die Klemmwirkung zu lösen.

**Ansprüche**

1. Kupplungsnabe zur Verbindung einer Welle mit einem durch diese zu drehenden Teil, bei der die Nabe über einen Teilbereich (2) ihrer axialen Länge geschlitzt und die Kupplungsverbindung durch axiale Klemmung des geschlitzten Bereich mittels einer selbsthaltenden Zustellvorrichtung bewirkt wird, **dadurch gekennzeichnet,** daß die Zustellvorrichtung aus einem achsparallel im Körper des ungeschlitzten Teilbereichs (1) der Nabe gehaltenen, verdrehbaren Zustellelement (6) besteht, das beim Verdrehen einen radialen Zustelldruck auf den geschlitzten Bereich (2) der Nabe bewirkt.
2. Kupplungsnabe nach Anspruch 1, **dadurch gekennzeichnet,** daß das Zustellelement durch einen Exzenternocken (6) gebildet ist, der im nichtgeschlitzten Teilbereich (2) der Nabe drehbar gelagert ist und eine axiale Schlüsselöffnung (7) aufweist.
3. Kupplungsnabe nach Anspruch 1, **dadurch gekennzeichnet,** daß das Zustellelement durch eine in den nichtgeschlitzten Teilbereich (2) der Nabe einschraubbaren Schraube mit kegeligem Kopf gebildet ist.

FIG. 2

FIG.1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 620 814   (MAY)<br>* Das ganze Dokument *<br>— — — | 1,3 | F 16 D 1/08 |
| Y | | 2 | |
| Y | DE-A-1 400 398   (KHD)<br>* Das ganze Dokument *<br>— — — | 2 | |
| X | DE-A-3 626 257   (FELLER)<br>* Das ganze Dokument *<br>— — — | 1 | |
| Y | | 2 | |
| A | | 3 | |
| Y | DE-C-8 275 69   (BOLEY)<br>* Das ganze Dokument *<br>— — — | 2 | |
| X | DE-A-3 044 283   (DIWISCH)<br>* Das ganze Dokument *<br>— — — | 1 | |
| A | | 3 | |
| X | DE-C-3 716 138   (FELLER)<br>* Das ganze Dokument *<br>— — — | 1 | |
| A | | 3 | |
| X | CH-A-3 855 68   (MARTINS)<br>* Das ganze Dokument *<br>— — — — — | 1 | |

| RECHERCHIERTE SACHGEBIETE (Int. Cl.5) |
|---|
| F 16 D 1/00<br>B 23 Q |

Der vorliegende Recherchenbericht wurde für alle Patentansprüche erstellt

| Recherchenort | Abschlußdatum der Recherche | Prüfer |
|---|---|---|
| Den Haag | 23 November 90 | BALDWIN D.R. |